# EUROPEAN PATENT APPLICATION

(11) **EP 0 902 072 A1**
(43) Date of publication of application: **17.03.1999**
(21) Application number: 97202795.7
(22) Date of filing: 11.09.1997
(51) Int. Cl.: C09K 3/10, B65D 53/00

(54) **Stress crack resistant closure**

(71) Applicant: THE PROCTER & GAMBLE COMPANY, Cincinnati, Ohio 45202 (US)
(72) Inventor: Varlet, Jean-Luc André Patrick, 1180 Uccle (BE)
(74) Representative: Mather, Peter Geoffrey

(57) **Abstract**

The present invention relates to an improved material composition allowing reduction of stress cracking of closures for containers with a closure, whereby the part of the container co-operating with the closure and the closure are made of materials with different rigidities, and characterised in that the more rigid material is comprising a metallocene catalysed thermo-plastic. In another aspect of the invention, a packaged product comprising the combination of a chemically aggressive composition with a package for the chemically aggressive composition is presented.

## Description

### Technical field

The invention relates generally to containers and closures therefor.

### Background of the invention

A closure for a container is usually secured by fastening the closure onto an opening in a part of the container. In order to achieve reliable fastening, it is preferred to use materials having different mechanical properties for the closure and the opened part of the container, so that a mechanical stress is created between the opened part of the container and the closure. The stress will act as a potential energy maintaining the closure in a fastened and leak tight state, in such a manner that this energy will have to be overcome prior to unfastening the closure.

The present invention concerns a closure for a container, the closure co-operating with a part of the container, whereby the closure is made of a first material and the part of the container is made of a second material, the first and the second material comprising thermo-plastics, whereby one of the first or second materials is more rigid than the other.

The stress energy can be contained in a liner of soft material which is integrated to the closure. In this manner, the material of the closure itself can be chosen without constraint, because the liner absorbs the stress energy when it is compressed against the opened part of the container. At the same time, the compressed liner is acting as a seal. Such liner arrangements normally requires specific manufacturing processes, as described for example in US-A-4 312 824 granted on the 26^{th} of January 1982.

The present invention also encompasses a packaged product comprising the combination of a chemically aggressive composition with a packaging system containing the chemically aggressive composition, the packaging system comprising a container and a closure for the container, the closure co-operating with a part of the container, whereby the closure is made of a first material and the part of the container is made of a second material, the first and the second material comprising thermo-plastics, whereby one of the first or second materials is more rigid than the other.

In case of the absence of a liner, the choice of the material used for the closure itself becomes important, because leak tight closure will be made directly between the closure and the part of the container. In such cases, stress cracking of the closure often occurs. Such a phenomenon is enhanced in presence of chemically aggressive products, such as bleach. In order to prevent cracking, US-5 227 366 granted on the 13^{th} of July 1993 proposes to modify the composition of the product contained in the container.

While allowing minimisation of the stress cracking of closures without need for a liner, modifying the composition of the product contained in the container involves significant extra costs. In addition, it is not a general solution to the stress cracking problem. Furthermore, it may be prejudicial to the quality and efficiency of the product contained in the container.

The present invention seeks to provide a closure for a container of the above mentioned kind providing a leak tight closure, whereby stress cracking is controlled while minimising extra costs.

### Summary of the invention

The present invention provides a closure for a container in a manner to satisfy the aforementioned needs.

The closure formed of a first material and the part of the container formed of a second material of the invention is characterised in that the more rigid material comprises a metallocene catalysed resin.

In another aspect of the invention, a packaged product comprising the combination of a chemically aggressive composition with a packaging system is also provided, characterised in that the more rigid material comprises a metallocene catalysed resin.

### Detailed description of the invention

The present invention relates to a closure for a container, the closure is formed of a first material and the part of the container is formed of a second material. The function of the closure is to allow closing an opening in a part of the container. Closure can be ensured in various ways. For example, the closure can be a cap screwed onto a neck, the neck being part of the container. In this example, the opening can be repeatedly opened and re-closed by screwing or unscrewing the cap. However, the closure/part of the container mechanism may be such that it only allows first opening without allowing re-closing.

In order to fulfil its function, the closure cooperates with a part of the container. In the example given above, the closure can co-operate with a threaded neck part of the container. The part of the container co-operating with the closure may be directly or indirectly part of the container. Indeed, the part of the container co-operating with the closure may be a transition piece between the closure and another part of the container.

The closure is made of a first material and the part of the container cooperating with the closure is made of a second material. This condition allows reliable functionality of the closure. The closure should remain in closed and leak tight position unless a sufficient external intervention allows opening. This means that the closure should be resistant to opening up to a force threshold. Once the force applied is sufficient, the closure should open. The leak tightness is provided by a mechanical resistance which is induced by the stress appearing between the first and second material when the closure is tightened and pressing the closure onto the part of the container in a leak tight manner. Indeed, such a stress would not take place if the two materials had exactly the same mechanical properties, so that the closure would leak in an unexpected and undesired manner.

The stress created at the closure between the two materials has a main function which is to maintain leak tightness by holding the closure tight onto the part of the container with which the closure co-operates. The stress can also have other functions. For example, the stress can be used for preventing easy opening of the container by holding the closure in position. However, such other functions may be fulfilled by other means. For example, the closure may be maintained into closed position by a snap ring which will ensure retention, whereas the stress created upon closure will ensure leak tightness.

By leak tightness, it is hereby meant that the closure should be such that liquid product would remain into the container and not leak between the closure and the part of the container when closed, in particular if the container is tilted, pressed or submitted to conditions such that leaking is likely to occur, as is the case in high temperature environment for example. Preferably, if the stress is sufficient, the closure may be air or gas tight, which is particularly recommended if the container contains a chemically aggressive composition.

Consequently, one of the first or second materials should be more rigid than the other. What is meant by more rigid is that one of the material should have a structure sufficiently weaker than the other so that it would be altered at tightening of the closure. Typically, the weaker material, i.e. the less rigid, would be submitted to a deformation or distortion, thus involving creation of a deformation potential energy which will ensure stability of the closure. Indeed, the deformation energy will have to be overcome for un-tightening the closure.

The first and second materials comprise thermoplastics. Thermo-plastics are very widely used for forming closures, containers or other parts. These thermoplastics can be processed by extrusion and parts can be formed by various methods, comprising injection or blow moulding. The advantages of thermoplastics is that they are usually easy to process. However, it is difficult to modify their properties so that they fulfil all requirements. Requirements which should be fulfilled include stability in presence of chemicals, good mechanical resistance and good processing qualities. Additionally in the case of the invention, two different materials should be used which both fulfil these requirements while having different mechanical properties. This means that usually a compromise should be made. The material properties can also be modified by adding various components to the material.

A traditional compromise is to use a poly-ethylene container, for example in the shape of a bottle, together with a poly-propylene closure. In this example, the closure is directly screwed onto a neck which is formed directly on top of the bottle. Use of these two materials allows good fastening of the closure because poly-ethylene is less rigid than poly-propylene, so that sufficient stress can appear at closure to ensure leak tightness or/and to maintain the closure in place. Additionally, poly-ethylene is a material which is particularly easy to process, so that the shape of the bottle can be adapted so as to withstand the stress in the closure area. However, poly-propylene is a more brittle material, so that stress cracking of the closure itself, in this case, may occur.

In an embodiment of the present invention applied to the traditional embodiment presented above, a metallocene catalysed resin is added to the poly-propylene, so that mechanical properties of the closure are modified so as to prevent stress cracking while sustaining the closure stress. In a most preferred embodiment, the metallocene catalysed resin is a metallocene catalysed poly-ethylene. Indeed, metallocene catalysed polyethylene has a high affinity to poly-propylene and it secures a very good homogenisation between the poly-propylene resin and the metallocene catalysed additive, as well as a good dispersion. The metallocene catalysed resin improves the stress crack resistance because it acts as a nucleating agent, allowing formation of a high number of small crystals. Their number limits their potential growth, thus improving the flexibility of the closure. The metallocene catalysed resin may be added at various stages of the manufacturing process.

The stress cracking issue is particularly acute when a chemically aggressive composition such as an oxidising composition is contained in the container. Firstly, stress cracking is likely to happen more often, and secondly it has damaging consequences when it occurs as it gives way to losses of an aggressive chemical compound in the environment, with potential human or environmental consequences. Indeed, it is a further object of the present invention to allow manufacture of an environmentally safe stress cracking resistant closure. The present invention applies in another aspect to a packaged product comprising the combination of a chemically aggressive composition with a packaging system containing the chemically aggressive composition. Indeed, in such a combination, the composition has a major influence on the stress cracking problem.

By a chemically aggressive composition it is meant that the composition may be such that stress cracking problems would be more acute in the presence of the composition. This may be due to a chemical reaction between part of the chemically aggressive composition and one or both of the materials ensuring closure.

In a preferred embodiment of the chemically aggressive composition-package combination of the invention, the chemically aggressive composition is an oxidising composition, such as a bleach composition. The bleach composition may typically comprise between 0.5% and 15% by weight of hypo-chlorite bleach, preferably between 2% and 10% and most preferably between 4% and 6%. Hypo-chlorite is an oxidising agent which may react with the part of the container or with the closure material. The bleach composition may also comprise fragrance in a proportion comprised between 0.1% up to 3% by weight, preferably between 1% and 2%. The fragrance quantity mostly depends on the price of the perfume. It was found that the presence of perfume was aggravating the oxidising action of the hypo-chlorite, for example, because of the aromatic molecules contained in the perfume. Oxidation is aggravated further in the presence of suriactants. Surfactants may indeed be comprised in the composition between 0.1% to 10% by weight, preferably between 1% to 5%, most preferably between 2% and 4%.

It was found that the packaged product comprising the combination of the invention was significantly reducing stress cracking issues. In a typical case, a bleach composition is contained in a package as described in the traditional embodiment above. Stress cracking can then be reduced by introducing a metallocene catalysed resin into the rigid material, which is the poly-propylene of the closure in the traditional embodiment above. In a most preferred embodiment, the closure is completely made of a metallocene catalysed poly-propylene, having consequently an optimum molecular weight distribution.

In other preferred embodiments of the invention, the more rigid material comprises one or more metallocene catalysed resins, which may be used in one or more layers. In a preferred embodidement, two layers comprising different metallocene catalysed resins have a polypropylene layer in between these layers. Polypropylene layers may also cover one or more layers comprising a metallocene catalysed resin.

The preferred embodiments of the invention presented here are not limiting. Indeed, the more rigid material may not be the first material but the second material. Furthermore, the proportion of metallocene to be added to the rigid material can vary. The rigid material may be completely made of metallocene catalysed resins, or may contain such a resin as an additive. The exact proportion may be set depending on the desired mechanical properties of the final material.

In preferred embodiments of the invention, the metallocene catalysed resin is a metallocene catalysed poly-olefin, preferably a metallocene catalysed polyethylene, in proportions comprised between 0.1% to 30% by unit of weight of the final rigid material, more preferably between 2% and 20%, most preferably between 5% and 10%. The metallocene catalysed resin may also be a poly-propylene, and may be found in proportions comprised between 0.1% to 100% by unit of weight of the final rigid material, more preferably between 10% and 60%, most preferably between 20% and 40%.

The example which follows explains the invention:

### Example:

The closure of the example is a cap extruded and injected with the first material using conventional processes, the first material being the more rigid material, the first material being a blend comprising 10% by weight of metallocene catalysed polyethylene having a molecular weight distribution of less than 3.5 and the first material also comprising up to 90% by weight of Ziegler-Natta catalysed polypropylene having a density of 0.9 g/cm³. The molecular weight distribution is defined here as M_{w}/ Mₙ, whereby M_{w} is the weight average molecular weight and Mₙ is the number average molecular weight. The first material may also include additional materials that do not affect its essential character, for instance stabilizers, pigments, processing aids such as waxes, deodorizing agents, anti-static agents, anti-blocking agents, plasticizers and the like.

The cap screws directly onto a threaded neck part of the container, the container is extruded and blow moulded from the second material using conventional processes, the second material being formed from Ziegler-Natta catalysed high density polyethylene having a density of 0.96 g/cm³. The second material may also include additional materials that do not affect its essential character, for instance stabilizers, pigments, processing aids such as waxes, deodorizing agents, anti-static agents, anti-blocking agents, plasticizers and the like.

The product contained in the container of the example is an aqueous bleach composition comprising 5% by weight of hypo-chlorite, 2% by weight of fragrance and 3% by weight of surfactant.

Such a packaged product has a good resistance to stress cracking while allowing reliable closure.

## Claims

1. A closure for a container, the closure co-operating with a part of the container, whereby the closure is formed of a first material and the part of the container is formed of a second material, the first and the second material comprising thermo-plastics, whereby one of the first or second materials is more rigid than the other, characterised in that the more rigid material comprises a metallocene catalysed resin.

2. A closure for a container as in claim 1 wherein the thermo-plastics are comprising poly-olefins.

3. A closure for a container as in claim 2, wherein the first material is more rigid than the second material.

4. A closure for a container as in claim 3, wherein the first material comprises poly-propylene, and the second material comprises poly-ethylene.

5. A closure for a container as in claim 1, wherein the metallocene catalysed resin is a polyethylene or a poly-propylene.

6. A closure for a container a in claim 1, wherein the metallocene catalysed resin is comprised between 0.1% to 30% by weight of the more rigid material.

7. A closure for a container as in claim 1, wherein the co-operation of the closure with the part of the container is forming a leak tight closure.

8. A closure for a container as in claim 1, wherein the more rigid material comprises more than one layer, whereby at least one layer comprises a metallocene catalysed resin.

9. A packaged product comprising the combination of a chemically aggressive composition with a packaging system containing the chemically aggressive composition, the packaging system comprising a container and a closure for the container, the closure co-operating with a part of the container, whereby the closure is made of a first material and the part of the container is made of a second material, the first and the second material comprising thermo-plastics, whereby one of the first or second materials is more rigid than the other, characterised in that the more rigid material comprises a metallocene catalysed resin.

10. The packaged product comprising the combination of a chemically aggressive composition with a packaging system containing the chemically aggressive composition as in claim 9, wherein the chemically aggressive composition is an oxidising composition.

11. The packaged product comprising the combination of an oxidising composition with a packaging system containing the oxidising composition as in claim 10, wherein the oxidising composition is a bleach composition.

12. The packaged product comprising the combination of a bleach composition with a packaging system containing the bleach composition as in claim 11, wherein the bleach composition comprises from 0.5% to 15% by weight of hypo-chloride.

13. The packaged product comprising the combination of a chemically aggressive composition with a packaging system containing the chemically aggressive composition as in claim 9, wherein the chemically aggressive composition comprises from 0.1% to 3% by weight of fragrance.

14. The packaged product comprising the combination of a chemically aggressive composition with a packaging system containing the chemically aggressive composition as in claim 9, wherein the chemically aggressive composition comprises from 0.1% to 10% by weight of surfactant.

15. The packaged product comprising the combination of a chemically aggressive composition with a packaging system containing the chemically aggressive composition as in claim 9, wherein the metallocene catalysed resin is a poly-propylene.
